# EUROPEAN PATENT APPLICATION

(11) **EP 4 092 307 A1**
(43) Date of publication of application: **23.11.2022**
(21) Application number: 22174229.9
(22) Date of filing: 19.05.2022
(51) Int. Cl.: F16L 37/14

(54) **CONNECTION SYSTEM FOR THERMO-HYDRAULIC PLANTS OR THE LIKE**

(30) Priority: 19.05.2021 IT 202100012992
(71) Applicant: SAF S.p.A., 36040 Val Liona (VI) (IT)
(72) Inventor: ALEARDI, Mattia, 36040 Val Liona (VI) (IT)
(74) Representative: Luppi, Emanuele

(57) **Abstract**

The connection system (1) for thermo-hydraulic plants or the like, comprises:
- at least one pipe (2) connectable with a thermo-hydraulic plant and adapted to convey at least one working fluid to/from the thermo-hydraulic plant, where the pipe (2) is made of at least one metal material other than copper; and
- at least one adapter body (3) which can be connected with at least one end of the pipe (2), made at least partly of at least one plastic material and connectable to the thermo-hydraulic plant.

## Description

### Technical Field

The present invention relates to a connection system for thermo-hydraulic plants or the like.

### Background Art

In the thermo-hydraulic field, but not only, the use is well known of copper piping provided with fitting portions for the connection to a thermo-hydraulic plant, such as a boiler, or to other types of fluid-operated systems. Such piping is generally intended to transport domestic water and/or water for room heating. The pipes of known type are suitably machined at their ends according to standardized geometries based on specific regulations to engage in appropriate components of the thermo-hydraulic plant, such as e.g. a pump.

As stated above, the pipes are generally made of copper or of an alloy thereof. In fact, copper has optimal thermo-mechanical characteristics for such applications.

In particular, copper is an extremely malleable material and is extremely easy and precise to machine in order to make the engagement portions according to standardized geometries so as to ensure sealing thereof.

In addition, copper is a bacteriostatic metal and reduces fungal and mold growth inside the fluid-operated circuit.

Copper pipes do however have some drawbacks.

First of all, copper is an uncommon metal and its cost is increasingly high. In fact, it should be pointed out that the application of excellence for copper is in electrical engineering and electronics, for example, for making electrical wires and cables.

In addition, copper is easily oxidized and can release toxic contaminants into the water over time. For this reason, the use of copper for domestic water piping is strongly discouraged.

The aforementioned drawbacks have been partly overcome by the use of piping made of different metal materials, such as steel.

In fact, steel is an extremely safe metal and frequently used in the health care and food sectors.

However, steel, but also other metals, is less malleable than copper and has lower thermo-mechanical properties than the latter.

Steel pipes are more difficult to work with and machining tolerances are not always met with the result that they perform less well than copper pipes.

In addition, steel has mechanical properties that are less adapted to withstand mechanical stresses and pressure surges such as so-called water hammer. Water hammer is a hydraulic phenomenon that occurs in a pipe when the flow of fluid moving within it is abruptly stopped, such as e.g. by the sudden closing of a valve.

Again, steel in contact with copper in the thermo-hydraulic plant may induce the formation of galvanic currents that lead to corrosion of the plant itself.

In addition, in the case of a thermal-hydraulic plant of the condensing boiler type, the connection systems dedicated to the collection of condensate fluids are particularly prone to chemical corrosion due to the acidity levels of flue gas condensate water.

It is, therefore, apparent how the need is felt to refine the known connection systems in order to overcome the aforementioned drawbacks.

### Description of the Invention

The main aim of the present invention is to devise a connection system for thermo-hydraulic plants or the like which is provided with optimal thermo-mechanical properties and at the same time has a low cost.

Another object of the present invention is to devise a connection system for thermo-hydraulic plants or the like which avoids the release of toxic substances into the water and does not induce corrosion phenomena.

Another object of the present invention is to devise a connection system for thermo-hydraulic plants or the like which can overcome the aforementioned drawbacks of the prior art within the framework of a simple, rational, easy and effective to use, as well as affordable solution.

The aforementioned objects are achieved by this connection system for thermo-hydraulic plant or the like having the characteristics of claim 1.

### Brief Description of the Drawings

Other characteristics and advantages of the present invention will become more apparent from the description of a preferred, but not exclusive, embodiment of a connection system for thermo-hydraulic plants or the like, illustrated by way of an indicative, yet non-limiting example, in the accompanying tables of drawings in which:
Figure 1 is an exploded axonometric view of the connection system according to the invention in accordance with a first embodiment;
Figure 2 is a longitudinal cross-sectional view of the connection system in Figure 1;
Figure 3 is an exploded axonometric view of the connection system according to the invention in accordance with a second embodiment;
Figure 4 is a longitudinal cross-sectional view of the connection system in Figure 2.

### Embodiments of the Invention

With particular reference to these figures, reference numeral 1 globally indicates a connection system for thermo-hydraulic plants or the like.

The connection system 1 comprises at least one pipe 2 associable with a thermo-hydraulic plant and adapted to convey at least one working fluid from/to the thermo-hydraulic plant itself.

In the context of this disclosure, the term "thermo-hydraulic plant" refers, for example, to a boiler or similar hydraulic and/or fluid-operated systems.

The pipe 2 is part of a system of pipes intended for the circulation of the working fluid.

According to the invention, the pipe 2 is made of at least one metal material other than copper.

In the context of this disclosure, the term "copper" refers to pure or substantially pure copper, i.e., having purity greater than 99% and having the normal impurities allowed by current regulations for use in this technical field. Copper generally used for piping is estimated to have purity ≥ 99.90% (unlike copper used for electrical wires, which has purity ≥ 99.97%).

In other words, the pipe 2 does not contain copper or may possibly contain copper in the form of impurity.

Usefully, the metal material is selected from stainless steel, galvanized steel, aluminum or a combination thereof.

The aforementioned metal materials are normally used for applications in the health/food sector and have a significantly reduced cost compared to copper.

Preferably, the metal material is stainless steel. In fact, stainless steel is an extremely durable material that can be easily applied to this type of application. The connection system 1 according to the invention also comprises at least one adapter body 3 associable with at least one end of the pipe 2 and connectable to the thermo-hydraulic plant.

In use, the adapter body 3 is positioned between the pipe 2 and the thermo-hydraulic plant.

The adapter body 3 is made at least partly of at least one plastic material.

The plastic material is easily machined and allows the adapter body 3 to be made according to standardized geometries based on current regulations for connection to the thermo-hydraulic plant.

Usefully, the plastic material is selected from the list comprising: polyamide, polyimide, polyetherimide, polycarbonate, polyphenylene sulfide, polyetheretherketone or a combination thereof.

Preferably, the plastic material is polyamide 66.

It cannot however be ruled out that the adapter body 3 may be made of a different plastic material.

Advantageously, the adapter body 3 is made of at least one plastic material loaded with at least one reinforcing material.

In this way, the adapter body 3 is extremely resistant to mechanical stresses and pressure variation, such as the so-called "water hammer", and to chemical stresses, such as acid chemical corrosion phenomena.

More specifically, the reinforcing material is present in an amount of 10% to 50% by weight with respect to the amount of plastic material.

Preferably, the reinforcing material is present in an amount of 20% to 40% by weight with respect to the amount of plastic material.

More preferably, the reinforcing material is present in an amount substantially equal to 30 percent by weight with respect to the amount of plastic material. The reinforcing material is selected from the list comprising: graphene, glass fiber, carbon fiber, aramid fiber, ceramic fibers, basalt fiber or a combination thereof.

Preferably, the reinforcing material is graphene.

In accordance with a preferred embodiment, the adapter body 3 is made of polyamide 66 loaded with 30% graphene by weight.

The adapter body 3 is internally hollow.

In more detail, the adapter body 3 has a substantially cylindrical inner cavity that runs along a longitudinal axis.

The longitudinal axis of the inner cavity coincides with the longitudinal axis of the pipe 2.

The adapter body 3 comprises at least one housing portion 4 adapted to receive the pipe 2 and at least one engagement portion 5 adapted to be connected to the thermo-hydraulic plant, and arranged adjacent to each other.

The engagement portion 5 comprises standardized fastening means 6 defined on the outer surface of the engagement portion 5 itself, for fastening to the thermo-hydraulic plant.

Two types of adapter bodies 3 are shown in the figures, which differ in the conformation of the relevant engagement portions 5, made according to the conformation of the relevant component of the thermo-hydraulic plant. However, the technical and structural characteristics of the adapter bodies 3 shown are substantially the same.

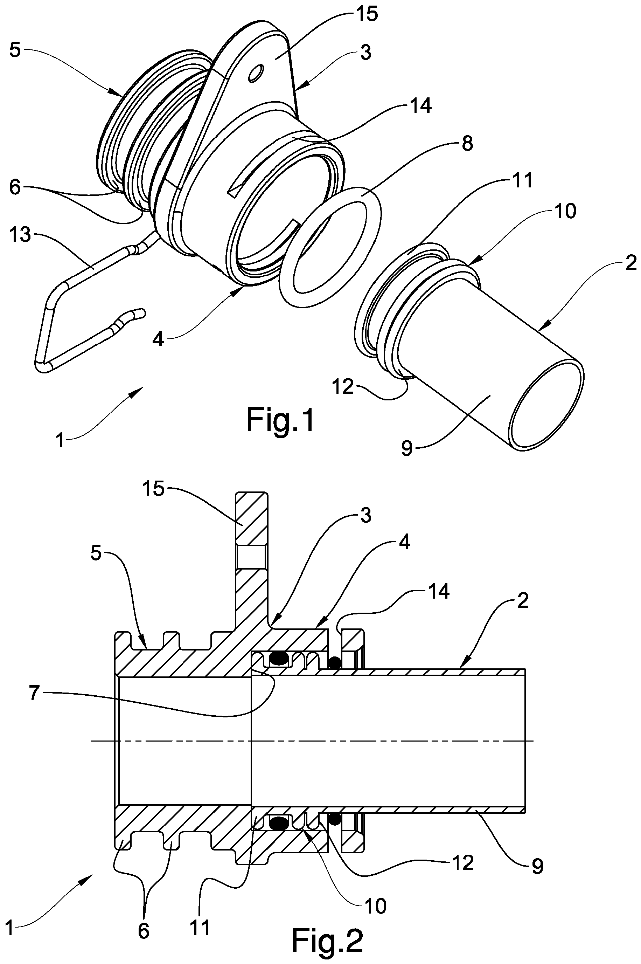

In accordance with the first embodiment shown in Figures 1 and 2, the adapter body 3 also comprises a securing portion 15 adapted to allow further attachment of the adapter body 3 to the thermo-hydraulic plant.

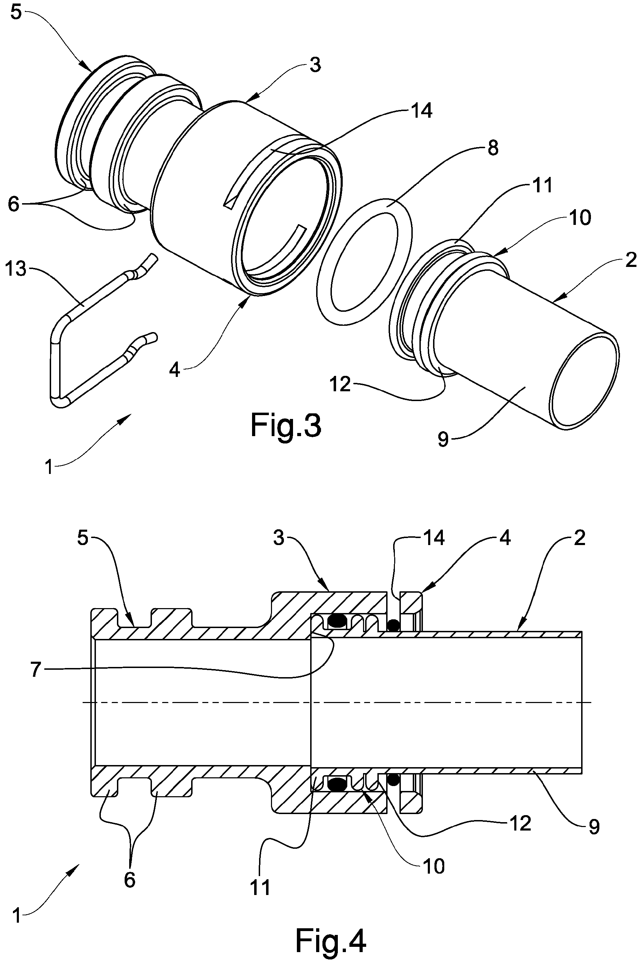

In accordance with the second embodiment shown in Figures 3 and 4, the connection system 1 comprises securing means, not shown in detail in the figures, adapted to allow further securing the adapter body 3 to the thermo-hydraulic plant. The securing means comprise, for example, a fork element. Conveniently, the engagement portion 5 comprises an abutment surface 7 adapted to abut against at least one end of the pipe 2.

The abutment surface 7 faces the housing portion 4 and prevents the pipe 2 from coming into contact with the metal components of the thermo-hydraulic plant.

In this way, the adapter body 3 provides electrical isolation between the thermo-hydraulic plant and the pipe 2 and prevents galvanic current formation, thus reducing the risks of corrosion of the metal components.

The connection system 1 may also comprise at least one sealing element 8 positioned between the pipe 2 and the abutment surface 7.

In the embodiment shown in the figures, the sealing element 8 is of the type of an O-ring. It cannot however be ruled out that the sealing element may be of a different type.

The engagement portion 5 has at least one inner diameter which is smaller than the inner diameter of the housing portion 4.

The pipe 2 has an inner diameter substantially corresponding to the inner diameter of the engagement portion 5.

Following installation, therefore, the inner cavity defined by the pipe 2 and by the adapter body 3 is substantially continuous.

The pipe 2 comprises at least one main body 9 of tubular shape and linking means 10 associated with at least one end of the main body itself.

The linking means 10 are adapted to operate in conjunction with the adapter body 3 to keep the pipe 2 attached to the adapter body itself.

The linking means 10 are cut into the end of the main body 9 and allow a direct link of the pipe 2 to the adapter body 3, thus avoiding the use of additional components and ensuring an optimal seal of the connection system 1. Conveniently, the linking means 10 comprise one or more collars 11, 12 defined on the outer surface of the pipe 2 and adapted to abut against the inner surface of the housing portion 4.

Specifically, the linking means 10 comprise at least a first collar 11 arranged at the edge of the end of the main body 9 and adapted to abut against the abutment surface 7 and at least a second collar 12 spaced apart from the first collar 11. The first collar 11 has the function of increasing the supporting surface of the pipe to the abutment surface 7, thus increasing the seal of the connection system 1.

The second collar 12 helps to keep the pipe 2 attached to the adapter body 3. For this purpose, the connection system 1 also comprises retaining means 13, 14 adapted to retain the pipe 2 to the adapter body 3.

The retaining means 13, 14 comprise at least one retaining element 13 and at least one through slot 14 defined in the housing portion 4 and adapted to receive, in use, the retaining element 13.

In more detail, the through slot 14 communicates with the inner cavity and is arranged transverse to the longitudinal axis of the same.

The retaining element 13, of the type of a hairpin, is adapted, in use, to operate in conjunction with at least one of the collars 11, 12 through the through slot 14 to retain the pipe 2 in the housing portion 4.

In more detail, the retaining element 13 is adapted to operate in conjunction with the second collar 12 to retain the pipe 2 in the housing portion 4.

It has, in practice, been ascertained that the described invention achieves the intended objects, and in particular the fact is emphasized that by combining a pipe made of a metal other than copper with an adapter body made of a plastic material, the present connection system for thermo-hydraulic plants or the like is provided with optimal thermo-mechanical properties and at the same time is of low cost.

In addition, the connection system according to the invention avoids the release of toxic substances into the water and prevents possible corrosion.

## Claims

1. Connection system (1) for thermo-hydraulic plants or the like, comprising at least one pipe (2) connectable with a thermo-hydraulic plant and adapted to convey at least one working fluid to/from said thermo-hydraulic plant, **characterized by** the fact that said pipe (2) is made of at least one metal material other than copper and by the fact that it comprises at least one adapter body (3) which can be connected with at least one end of said pipe (2), made at least partly of at least one plastic material and connectable to said thermo-hydraulic plant.

2. Connection system (1) according to claim 1, **characterized by** the fact that said metal material is selected from stainless steel, galvanized steel, aluminum or a combination thereof.

3. Connection system (1) according to one or more of the preceding claims, **characterized by** the fact that said adapter body (3) is made of at least one plastic material loaded with at least one reinforcing material.

4. Connection system (1) according to one or more of the preceding claims, **characterized by** the fact that said plastic material is selected from the list comprising: polyamide, polyimide, polyetherimide, polycarbonate, polyphenylene sulfide, polyetheretherketone, or a combination thereof.

5. Connection system (1) according to one or more of the preceding claims, **characterized by** the fact that said reinforcing material is selected from the list comprising: graphene, glass fiber, carbon fiber, aramid fiber, ceramic fibers, basalt fiber, or a combination thereof.

6. Connection system (1) according to one or more of the preceding claims, **characterized by** the fact that said adapter body (3) comprises at least one housing portion (4) adapted to receive said pipe (2) and at least one engagement portion (5) adapted to be connected to said thermo-hydraulic plant, and arranged adjacent to each other.

7. Connection system (1) according to one or more of the preceding claims, **characterized by** the fact that said engagement portion (5) has at least one inner diameter which is smaller than the inner diameter of said housing portion (4), said engagement portion (5) comprising an abutment surface (7) adapted to abut against at least one end of said pipe (2).

8. Connection system (1) according to one or more of the preceding claims, **characterized by** the fact that said pipe (2) has an inner diameter substantially corresponding to the inner diameter of said engagement portion (5).

9. Connection system (1) according to one or more of the preceding claims, **characterized by** the fact that said pipe (2) comprises at least one main body (9) of tubular shape and linking means (10) associated with at least one end of said main body (9) and adapted to operate in conjunction with said adapter body (3) to keep said pipe (2) attached to said adapter body (3).

10. Connection system (1) according to one or more of the preceding claims, **characterized by** the fact that said linking means (10) comprise one or more collars (11, 12) associated with the outer surface of said pipe (2) and adapted to abut against the inner surface of said housing portion (4).

11. Connection system (1) according to one or more of the preceding claims, **characterized by** the fact that it comprises retaining means (13, 14) adapted to retain said pipe (2) to said adapter body (3) comprising at least one retaining element (13) and at least one through slot (14) defined in said housing portion (4) and adapted to receive, in use, said retaining element (13), said retaining element (13) being adapted, in use, to operate in conjunction with at least one of said collars (11, 12) through said through slot (14) to retain said pipe (2) in said housing portion (4).
